# EUROPÄISCHE PATENTSCHRIFT

(11) **EP 2 742 666 B1**
(45) Veröffentlichungstag und Bekanntmachung des Hinweises auf die Patenterteilung: **25.03.2020**
(21) Anmeldenummer: 11790578.6
(22) Anmeldetag: 18.11.2011
(51) Int. Cl.: H04L 29/08, H04L 29/06

(54) **KOMMUNIKATIONSSYSTEM**
COMMUNICATION SYSTEM
SYSTÈME DE COMMUNICATION

(30) Priorität: 08.08.2011 DE 102011109678
(43) Veröffentlichungstag der Anmeldung: 18.06.2014
(73) Patentinhaber: Livisi GmbH, 45128 Essen (DE)
(72) Erfinder: HOFFMANN, Wolfgang, 44289 Dortmund (DE)
(74) Vertreter: Cohausz & Florack
(86) Internationale Anmeldenummer: PCT/EP2011/070453
(87) Internationale Veröffentlichungsnummer: WO 2013/020609

(56) Entgegenhaltungen:
- EP-A1- 1 936 510
- US-A1- 2004 151 132
- US-A1- 2008 281 467
- US-A1- 2010 185 771
- US-A1- 2011 153 718
- BRYAN FORD PYDA SRISURESH: "Peer-to-Peer Communication Across Network Address Translators", USENIX,, 14 March 2005 (2005-03-14), pages 1-14, XP061012919, [retrieved on 2005-03-14]

## Beschreibung

Die Erfindung betrifft ein Kommunikationssystem mit mindestens einer Recheneinrichtung und mindestens einer entfernt angeordneten mit der Recheneinrichtung über ein Netzwerk verbindbaren Servereinrichtung, wobei die Recheneinrichtung zum Senden mindestens einer ersten Anfrage an die Servereinrichtung eingerichtet ist. Darüber hinaus betrifft die Erfindung ein Verfahren zum Betreiben eines Kommunikationssystems und ein Computerprogramm.

Smartphones aber auch andere Mobilgeräte erlauben einem Benutzer Audio- und/oder Videodaten von anderen Datenquellen zu laden und (gleichzeitig) abzuspielen. Beispielsweise kann ein Mobilgerät über ein Netzwerk mit einer Recheneinrichtung eine Punkt-zu-Punkt-Kommunikationsverbindung für einen Datenstream herstellen, um Audio- und/oder Videodaten wiederzugeben.

Die Recheneinrichtung kann sich jedoch in einem lokalen und insbesondere geschützten Teilnetzwerk befinden. Der Zugriff bzw. das Herstellen einer Kommunikationsverbindung von einem Mobilgerät mit einer derartigen Recheneinrichtung gestaltet sich häufig schwierig. Der Grund hierfür ist, dass das lokale Netzwerk bzw. die Recheneinrichtung in der Regel einen Schutzmechanismus, beispielsweise eine Firewall, aufweist. Eine Firewall beschränkt den Zugriff von externen Einrichtungen auf die Recheneinrichtung bzw. das lokale Netzwerk. Somit wird durch die Firewall jedoch auch eine von dem Mobilgerät initiierte Herstellung einer Kommunikationsverbindung blockiert, da beispielsweise eine von dem Mobilgerät ausgesandte Anfrage durch die Firewall geblockt wird.

Aus dem Stand der Technik ist zur Lösung des Problems bekannt, die Schutzanwendung für jedes Mobilgerät explizit freizuschalten, so dass ein externer Zugriff auf die Recheneinrichtung ermöglicht wird. Eine entsprechende Konfiguration einer Schutzanwendung ist jedoch zum einen aufwendig, insbesondere bei einer Vielzahl von freizuschaltenden Mobilgeräten, und überfordert einen Benutzer schnell. Zum anderen kann eine fehlerhafte Freischaltung dazu führen, dass unberechtigte Dritte auf die lokale bzw. nutzerseitige Recheneinrichtung zugreifen können.

Grundsätzlich ist zudem aus dem Stand der Technik das sogenannte "Push-Prinzip" bekannt. Beispielsweise offenbart die EP 2 137 497 B1 ein System mit einer nutzerseitigen Recheneinrichtung und einer anbieterseitigen Servereinrichtung, bei dem die Recheneinrichtung aktiv Daten an die anbieterseitige Servereinrichtung sendet. Die anbieterseitige Servereinrichtung kann auf die übertragenen Daten jeweils antworten. Die Antworten der Servereinrichtungen werden im Gegensatz zu Anfragen nicht geblockt. Durch das Senden einer Antwort auf eine Anfrage der Recheneinrichtung kann eine nutzerseitige Firewall legitim überwunden werden.

Dieses "Push-Prinzip" hat jedoch den Nachteil, dass sich der Empfänger, wie ein Mobilgerät, passiv verhält und eine Kommunikationsverbindung nur durch die nutzerseitige Recheneinrichtung aufgebaut werden kann. Um jedoch einem Mobilgerät (nahezu) jederzeit einen Kommunikationsverbindungsaufbau mit der Recheneinrichtung zu ermöglichen, müsste die nutzerseitige Recheneinrichtung regelmäßig und in kurzen Zeitabständen Anfragen an das Mobilgerät aussenden, auch wenn das Herstellen einer Kommunikationsverbindung von Seiten des Mobilgeräts nur selten erwünscht ist. Dies führt zu einem hohen (unnötigen) Datenverkehr. Der Datenverkehr ist umso größer, je mehr Mobilgeräte verwendet werden. Zudem muss der Recheneinrichtung jedes Mobilgerät bekannt sein. Die Nutzung eines anderen Mobilgeräts ist im Stand der Technik nicht möglich, da dieses nicht "gepollt" wird.

Die US 2004/151132 A1 offenbart ein Kommunikationssystem mit einer Recheneinrichtung, einer Servereinrichtung und einem Mobilgerät, wobei eine direkte Kommunikationsverbindung zwischen dem Mobilgerät und der Recheneinrichtung nicht hergestellt werden kann.

Darüber hinaus ist aus der US 2008/281467 A1 ein Kommunikationssystem zur Steuerung eines Roboters mittels einer entfernt angeordneten Steuereinrichtung und einer Servereinrichtung bekannt, wobei der Roboter über eine Firewall abgesichert sein kann.

Aus der US 2011/153718 A1 ist bekannt, einen Client mit einem Server direkt zu verbinden, wobei der Verbindungsaufbau durch einen oder mehrere Mediations-Server unterstützt wird.

Der Erfindung liegt daher die Aufgabe zugrunde, ein Kommunikationssystem zur Verfügung zu stellen, welches in einfacher Weise einem Mobilgerät ermöglicht, eine Kommunikationsverbindung mit einer Recheneinrichtung herzustellen.

Die Aufgabe wird erfindungsgemäß gelöst durch ein Kommunikationssystem gemäß dem Anspruch 1.

Das Kommunikationssystem weist mindestens eine Recheneinrichtung und mindestens eine entfernt angeordnete mit der Recheneinrichtung über ein Netzwerk verbindbare Servereinrichtung auf, wobei die Recheneinrichtung zum Senden mindestens einer ersten Anfrage an die Servereinrichtung eingerichtet ist. Das Kommunikationssystem weist mindestens ein Mobilgerät auf. Das Mobilgerät ist eingerichtet, zum Herstellen einer Kommunikationsverbindung mit der Recheneinrichtung, eine zweite Anfrage an die Servereinrichtung zu senden. Die Servereinrichtung ist eingerichtet, die empfangene zweite Anfrage des Mobilgeräts in Form einer ersten Antwort auf die erste Anfrage der Recheneinrichtung an die Recheneinrichtung zu senden.

Erfindungsgemäß wird in einfacher Weise eine Kommunikationsverbindung zwischen einem Mobilgerät und einer nutzerseitigen Recheneinrichtung hergestellt, indem eine Anfrage eines Mobilgeräts zur Herstellung einer Kommunikationsverbindung nicht unmittelbar an die Recheneinrichtung gesendet, sondern an eine Servereinrichtung gesendet wird, welche diese Anfrage in Form einer Antwort an die Recheneinrichtung übermittelt.

Das Kommunikationssystem umfasst mindestens eine Recheneinrichtung. Die (nutzerseitige) Recheneinrichtung kann ein Kommunikationsmodul in Form einer geeigneten Schnittstelle aufweisen, um mit einer (anbieterseitigen) Servereinrichtung über ein Netzwerk kommunizieren zu können. Ferner kann die Recheneinrichtung geeignete Verarbeitungsmittel, wie einen Prozessor, Speicher, etc., aufweisen, um z.B. empfangene Daten verarbeiten zu können. Es versteht sich, dass auch die Servereinrichtung geeignete Schnittstellen, Verarbeitungsmittel, etc. aufweisen kann. Bevorzugt kann ein Netzwerk, wie das Internet, als Kommunikationskanal genutzt werden. Es versteht sich, dass auch andere Kommunikationskanäle, wie Global System for Mobile Communications (GSM), General Packet Radio Service (GPRS), Universal Mobile Telecommunications System (UMTS), etc. vorgesehen sein können.

Der Datentransfer bzw. die Kommunikation zwischen der Recheneinrichtung und der Servereinrichtung erfolgt erfindungsgemäß mittels"Polling". Die Recheneinrichtung kann mindestens eine erste Anfrage, z.B. ein Hypertext Transfer Protocol- (HTTP) Request, an die Servereinrichtung senden. Erfindungsgemäß wird eine Mehrzahl erster Anfragen in vorgebbaren Zeitabständen an die mindestens eine entfernt angeordnete Servereinrichtung gesendet. Liegen Daten in der Servereinrichtung für die anfragende Recheneinrichtung vor, beispielsweise Geräte und/oder Software Updates, so können diese von der Servereinrichtung in Form einer ersten Antwort, wie einer HTTP-Response, auf eine erste Anfrage an die Recheneinrichtung gesendet werden.

Erfindungsgemäß ist erkannt worden, dass in einfacher Weise eine Kommunikationsverbindung zwischen einem Mobilgerät und der Recheneinrichtung hergestellt werden kann, wenn das Mobilgerät eine Anfrage nicht an die Recheneinrichtung direkt, sondern an die Servereinrichtung sendet. Beispielsweise kann als Mobilgerät ein Smartphone, ein Handy, ein Personal Digital Assistant (PDA), ein Tablet-PC, oder dergleichen eingesetzt werden. Die Servereinrichtung ist dazu eingerichtet, die empfangene zweite Anfrage des Mobilgeräts in eine erste Antwort auf die erste Anfrage umzusetzen. Indem der Recheneinrichtung die zweite Anfrage des Mobilgeräts als Antwort auf die erste Anfrage übertragen wird, kann auch bei einer geschützten Recheneinrichtung die Anfrage an die Recheneinrichtung übertragen werden.

Das zuvor beschriebene Kommunikationssystem erlaubt Mobilgeräten in einfacher Weise eine Anfrage zur Herstellung einer Kommunikationsverbindung an die Recheneinrichtung zu übertragen. Eine aufwendige Konfiguration einer Schutzanwendung, wie einer Firewall, kann entfallen. Die Sicherheit der Recheneinrichtung wird nicht reduziert. Es ist zudem nicht erforderlich, eine Vielzahl an Mobilgeräten zu "pollen". Vielmehr kann vorteilhafterweise eine (ohnehin) vorgesehenes System umfassend die Rechen- und Servereinrichtung genutzt werden.

Erfindungsgemäß ist die Recheneinrichtung eingerichtet, zum Herstellen der Kommunikationsverbindung mit dem Mobilgerät eine dritte Anfrage nach Empfang der ersten Antwort der Servereinrichtung an das Mobilgerät zu senden. Nach Erhalt der zweiten Anfrage kann die Recheneinrichtung diese auswerten. Beispielsweise können die Art der Anfrage und Adressdaten des Mobilgeräts bestimmt werden. Die Recheneinrichtung kann eine dritte Anfrage unmittelbar an das anfragende Mobilgerät senden. Beispielsweise kann die Anfrage über das Internet gesendet werden. Es versteht sich auch hier, dass andere Kommunikationsnetze genutzt werden können. In einfacher Weise kann eine Kommunikationsverbindung mit dem Mobilgerät von der Recheneinrichtung initiiert werden.

Erfindungsgemäß ist das Mobilgerät eingerichtet, auf die dritte Anfrage der Recheneinrichtung eine zweite Antwort zum Herstellen der Kommunikationsverbindung an die Recheneinrichtung zu senden, derart, dass eine Kommunikationsverbindung zwischen der Recheneinrichtung und dem Mobilgerät hergestellt wird. Indem das Mobilgerät auf die dritte Anfrage antwortet, kann in einfacher Weise auch bei einer geschützten Recheneinrichtung eine Kommunikationsverbindung mit dieser hergestellt werden. Beispielsweise kann ein permanenter Kommunikationskanal zwischen der Recheneinrichtung und dem Mobilgerät hergestellt werden.

Gemäß einer weiteren Ausführungsform kann die Recheneinrichtung in einem Teilnetzwerk angeordnet sein. Das Teilnetzwerk kann ein lokales Netzwerk sein. Beispielsweise kann es sich um ein Hausautomationssystem handeln. Die Recheneinrichtung kann als zentrale Steuereinrichtung des Teilnetzwerkes, insbesondere des Hausautomationssystems, eingerichtet sein. Das Teilnetzwerk kann als drahtloses und/oder drahtgebundenes Netzwerk gebildet sein.

Ferner kann das Teilnetzwerk über eine Netzwerkeinrichtung mit dem Netzwerk, beispielsweise dem Internet, verbunden sein. Vorzugsweise kann ein Router oder eine ähnliche Einrichtung als Netzwerkeinrichtung vorgesehen sein. Eine Netzwerkeinrichtung erlaubt in besonders einfacher Weise eine Anbindung eines lokalen Netzwerkes an ein weiteres Netzwerk.

Es versteht sich, dass das Teilnetzwerk weitere Komponenten umfassen kann. Insbesondere bei einem Hausautomationssystem können Aktoren und/oder Sensoren zur Steuerung von Verbrauchern vorgesehen sein. Im Falle eines Hausautomationssystems kann vorteilhafterweise mittels des zuvor beschriebenen Kommunikationssystems eine (direkte und permanente) Kommunikationsverbindung zwischen der zentralen Steuerung des Hausautomationssystems und einem Mobilgerät zur hergestellt werden.

In einer bevorzugten Ausführungsform des Kommunikationssystems kann die Netzwerkeinrichtung eine Schutzanwendung zur Beschränkung eines externen Zugriffs auf das Teilnetzwerk aufweisen. Die Schutzanwendung, wie eine Firewall, kann den Zugriff von (unberechtigten) Dritten auf das lokale Netzwerk bzw. die Recheneinrichtung verhindern. Insbesondere können Anfragen von externen Einrichtungen blockiert werden.

Wie bereits beschrieben wurde, kann das Teilnetzwerk grundsätzlich eine Mehrzahl beliebiger weiterer Komponenten umfassen. Gemäß einer bevorzugten Ausführungsform kann mindestens eine Datenquelle mit der Recheneinrichtung verbunden sein. Eine Datenquelle, beispielsweise ein Computer, eine Datenbank oder eine ähnliche Einrichtung, kann insbesondere ein Speichermedium umfassen. Als Speichermedium kann beispielsweise eine Festplatte, ein Universal Serial Bus (USB) Stick, ein optischer Speicher und dergleichen zum Einsatz kommen. Vorzugsweise können in dem Speichermedium Mediadaten, wie Audio- und/oder Videodaten, speicherbar sein.

Vorzugsweise kann ein Kommunikationskanal für eine gesicherte Übertragung von Daten zwischen der Datenquelle und der Recheneinrichtung vorgesehen sein. Beispielsweise kann eine drahtgebundene Verbindung, wie ein Local Area Network (LAN) Kabel, vorgesehen sein. Auch kann eine drahtlose Verbindung vorgesehen sein. Eine besonders sichere drahtlose Verbindung kann über Control over Secure IP (CosIP) erzielt werden. Das Mobilgerät kann in sicherer und gleichzeitig einfacher Weise über die Recheneinrichtung auf die in der Datenquelle gespeicherten Daten zugreifen. Es versteht sich, dass die Datenquelle alternativ in der Recheneinrichtung integriert sein kann.

Des Weiteren kann in einer weiteren Ausführungsform des Kommunikationssystems vorgesehen sein, dass das Mobilgerät mindestens eine Anwendung zur Erzeugung der zweiten Anfrage und/oder der zweiten Antwort aufweist. Die Anwendung kann eine Client-Komponente und/oder eine Server-Komponente umfassen. Insbesondere kann eine HTTP-Clientkomponente und/oder eine HTTP-Serverkomponente vorhanden sein. Vorzugsweise kann zum Aussenden der zweiten Anfrage eine HTTP-Clientkomponente vorgesehen sein. Ferner kann zum Empfangen der dritten Anfrage der Recheneinrichtung eine HTTP-Serverkomponente vorgesehen sein. Eine entsprechende Anwendung kann in einfacher Weise auf das Mobilgerät geladen werden.

Die Kommunikationsverbindung zwischen dem Mobilgerät und der Recheneinrichtung kann gemäß einer weiteren Ausführungsform eine Punkt-zu-Punkt-Kommunikationsverbindung für einen Datenstream sein. Beispielsweise kann eine Streamingverbindung zwischen dem Mobilgerät und der Recheneinrichtung bzw. der mit der Recheneinrichtung verbindbaren Datenquelle hergestellt werden. Hierbei kann das Mobilgerät der Streaming-Client sein. Eine entsprechende Clientanwendung kann vorzugsweise in der zuvor beschriebenen Anwendung des Mobilgeräts integriert sein. Video- und/oder Audiodaten aus einer (geschützten) Mediathek des Benutzers können auf dem Mobilgerät mittels geeigneter Wiedergabemittel wiedergegeben werden. Mit anderen Worten kann ein Benutzer (jederzeit) in einfacher und sicherer Weise auf seine privaten und geschützten Mediadaten zugreifen und diese auf seinem Mobilgerät wiedergeben.

Ein weiterer Aspekt der vorliegenden Erfindung ist ein Verfahren zum Betreiben eines Kommunikationssystems gemäß Anspruch 7.

Das erfindungsgemäße Verfahren kann bevorzugt zum Betreiben eines zuvor beschriebenen Kommunikationssystems verwendet werden.

Verfahrensgemäß sendet die Recheneinrichtung zum Herstellen der Kommunikationsverbindung mit dem Mobilgerät eine dritte Anfrage nach Empfang der ersten Antwort der Servereinrichtung an das Mobilgerät. Auf die dritte Anfrage der Recheneinrichtung wird eine zweite Antwort zum Herstellen der Kommunikationsverbindung an die Recheneinrichtung von dem Mobilgerät gesendet, derart, dass eine Kommunikationsverbindung zwischen der Recheneinrichtung und dem Mobilgerät hergestellt wird.

Ein noch weiterer Aspekt der Erfindung ist ein Computerprogramm gemäß Anspruch 8.

Es gibt nun eine Vielzahl von Möglichkeiten, das erfindungsgemäße Kommunikationssystem, das erfindungsgemäße Verfahren zum Betreiben eines Kommunikationssystems und das erfindungsgemäße Computerprogramm auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels eines Kommunikationssystems gemäß der vorliegenden Erfindung; und
- Fig. 2: ein Flussdiagramm eines Ausführungsbeispiels eines Verfahrens gemäß der vorliegenden Erfindung.

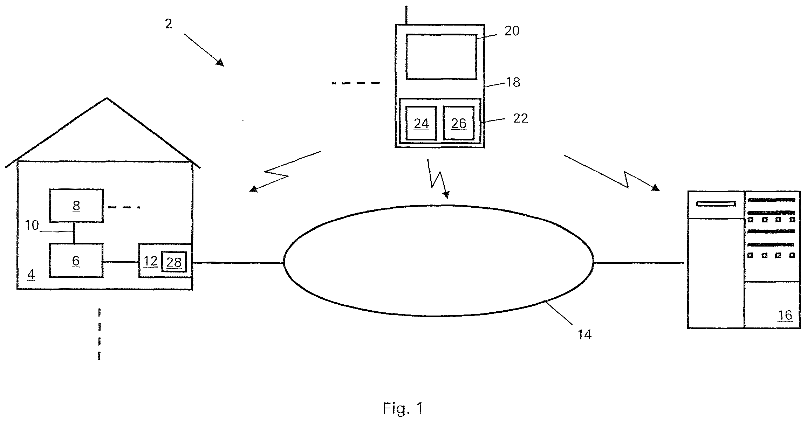

Figur 1 zeigt eine vereinfachte Ansicht eines Ausführungsbeispiels eines Kommunikationssystems 2 gemäß der vorliegenden Erfindung.

Das dargestellte Kommunikationssystem 2 weist ein Teilnetzwerk 4 auf. Das Teilnetzwerk 4 kann insbesondere in einem Gebäude, wie einem Wohnhaus oder einem Bürogebäude, angeordnet sein. Beispielsweise kann das Teilnetzwerk 4 ein Hausautomationssystem 4 sein. Das Teilnetzwerk 4 kann insbesondere eine (zentrale) Recheneinrichtung 6 umfassen. Die Recheneinrichtung 6 kann beispielsweise als zentrale Steuerung des Hausautomationssystems 4 ausgebildet sein.

Darüber hinaus kann mindestens eine Datenquelle 8 vorgesehen sein. Die Datenquelle 8 kann ein Computer 8 sein und insbesondere ein Speichermedium umfassen. Die Datenquelle 8, insbesondere das Speichermedium, kann bevorzugt eine Mediathek aufweisen. In der Mediathek können Audio- und/oder Videodaten gespeichert sein.

Die mindestens eine Datenquelle 8 kann mit der Recheneinrichtung 6 über einen Kommunikationskanal 10 verbunden sein. Beispielsweise kann ein drahtloser oder drahtgebundener Kommunikationskanal 10 vorgesehen sein. Insbesondere können die Daten verschlüsselt übertragen werden. Bei einem drahtlosen Kanal 10 können die Daten beispielsweise mittels CosIP übertragen werden.

Ferner ist die dargestellte Recheneinrichtung 6 mit einer Netzwerkeinrichtung 12, insbesondere einem Router 12, verbunden. Über den Router 12 kann eine Kommunikationsverbindung zu einem weiteren Netzwerk 14, wie dem Internet, hergestellt werden. Der Router 12 kann insbesondere eine Schutzanwendung 28, wie eine Firewall 28, bereitstellen, um einen unberechtigten Zugriff Dritter auf das Hausautomationssystem 4 zu verhindern. Es versteht sich, dass die Schutzanwendung 28 auch auf der Recheneinrichtung installiert sein kann.

Es versteht sich, dass ein Hausautomationssystem 4 weitere (nicht dargestellte) Komponenten, insbesondere Sensoren und/oder Aktoren, zur Steuerung von Verbrauchern umfassen kann. Die Steuerung sämtlicher Komponenten kann bevorzugt von der zentralen Recheneinrichtung 6 übernommen werden.

An dem weiteren Netzwerk 14 kann eine entfernt angeordnete Servereinrichtung 16 einer Zentrale angeschlossen sein. Die Zentrale kann insbesondere ein Dienstanbieter sein. Der Dienstanbieter kann mittels der Servereinrichtung 16 weitere Dienste, Services und Geräte-Softwareupdates für das Hausautomationssystem 4 bereitstellen. Es versteht sich, dass die anbieterseitige Servereinrichtung 16 die entsprechenden Dienste, Services und Geräte-Softwareupdates für eine Vielzahl von Hausautomationssystemen bereitstellen kann.

Das Kommunikationssystem 2 umfasst des Weiteren mindestens ein Mobilgerät 18. Bei dem Mobilgerät 18 kann es sich um ein Smartphone, ein Tablet-PC oder dergleichen handeln. Es versteht sich, dass das Kommunikationssystem 2 eine Mehrzahl von Mobilgeräten 18 umfassen kann.

Das Mobilgerät 18 kann grundsätzlich zumindest mit der Servereinrichtung 16 der Zentrale und mit der zentralen Recheneinrichtung 6 des Teilnetzwerkes 4 kommunizieren. Das Mobilgerät 18 kann ein Display 20 aufweisen, um beispielsweise Videodaten, insbesondere ein Videodatenstream, abspielen zu können. Es versteht sich, dass das Mobilgerät 18 weitere Schnittstellen, wie Audio-Ausgänge zum Wiedergeben von Audiodaten, aufweisen kann.

Ferner kann der Figur 1 entnommen werden, dass das Mobilgerät 18 vorzugsweise eine Anwendung 22 aufweisen kann. Die Anwendung 22 kann insbesondere eine Client-Komponente 24 und eine Server-Komponente 26 umfassen. Insbesondere können eine HTTP-Clientanwendung 24 und eine HTTP-Serveranwendung 26 vorgesehen sein. Die Anwendung 22 kann in einfacher Weise auf das Mobilgerät 18 geladen werden und beispielsweise von der Servereinrichtung 16 für einen Download zur Verfügung gestellt werden.

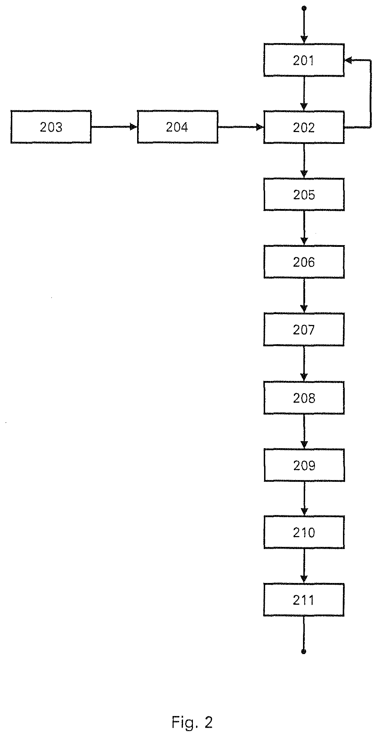

Die Funktionsweise des Kommunikationssystems 2 gemäß der Figur 1 wird nachfolgend ausführlich mit Hilfe der Figur 2 beschrieben. Die Figur 2 zeigt ein Flussdiagramm eines Ausführungsbeispiels eines Verfahrens zum Betreiben des Kommunikationssystems 2 gemäß der vorliegenden Erfindung.

In einem ersten Schritt 201 sendet die Recheneinrichtung 6 eine erste Anfrage, wie ein HTTP-Request, aus. Mit der ersten Anfrage kann die Recheneinrichtung 6 überprüfen, ob Daten für die Recheneinrichtung 6 bzw. einer Komponente des Teilnetzwerkes 4 auf Seiten der Servereinrichtung 16 vorhanden sind. In einem Schritt 202 empfängt die Servereinrichtung 16 diese erste Anfrage der zentralen Recheneinrichtung 6 über das Netzwerk 14.

Wenn Daten, wie ein neuer Dienst oder ein Update für einen Dienst und/oder ein Gerät, für die Recheneinrichtung 6 bzw. das Teilnetzwerk 4 vorhanden sind, können die Daten in Form einer Antwort, wie einer HTTP-Response, an die Recheneinrichtung 6 von der Servereinrichtung 16 gesendet werden (Schritt 205).

In der Regel ist das Teilnetzwerk 4, wie zuvor beschrieben wurde, ein gesichertes bzw. geschütztes Netzwerk 4. Insbesondere kann eine Firewall 28 oder dergleichen vorgesehen sein. Eine Firewall 28 verhindert, dass Dritte auf das lokale Netzwerk 4 ohne eine Berechtigung zugreifen können. Insbesondere werden durch eine Firewall 28 Anfragen aus dem Netzwerk 14 geblockt. Wird also beispielsweise von der Servereinrichtung 16 oder dem Mobilgerät 18 eine Anfrage direkt an die Recheneinrichtung 6 gesendet, so blockiert die Firewall 28 eine Datenübertragung. Mit anderen Worten kann die Recheneinrichtung 6 eine entsprechende Anfrage nicht empfangen.

Durch das zuvor beschriebene "Polling-Kommunikationsmodell" (Schritte 201, 202, 205) kann dieses Problem umgangen. In einfacher Weise können berechtigte Zugriffe auf das nutzerseitige Netzwerk 4 zugelassen werden. Die Kommunikation wird in diesem Fall nicht von der Servereinrichtung 16, sondern von dem Client, also der Recheneinrichtung 6, initiiert. Dies ermöglicht, dass Daten von der Servereinrichtung 16 als erste Antwort auf die erste Anfrage des Clients 6 gesendet werden können. Eine Antwort auf eine Anfrage wird von der Firewall 28 nicht blockiert.

Wenn keine Daten zur Übertragung von der Servereinrichtung 16 an die Recheneinrichtung 6 vorliegen, kann das Verfahren mit Schritt 201 fortgesetzt werden. Beispielsweise wartet die Recheneinrichtung 6 eine vorgebbare Zeitspanne auf eine Antwort der Servereinrichtung 16. Empfängt die Recheneinrichtung 6 in dieser Zeitspanne keine Antwort, so geht die Recheneinrichtung 6 davon aus, dass keine Daten vorliegen. Später empfangene Daten können blockiert werden. Nach einer weiteren vorgebbaren Zeitspanne kann erneut eine erste Anfrage ausgesendet werden. Der Schritt 201 kann insbesondere in vorgebbaren Zeitabständen durchgeführt werden. Vorzugsweise kann die Recheneinrichtung 6 in periodischen Zeitabständen eine erste Anfrage an die Servereinrichtung 16 aussenden.

Möchte ein Benutzer Mediadaten, wie Video- und/oder Audiodaten, welche in einer Datenquelle 8, wie einem Computer des Benutzers, gespeichert sind, auf einem Mobilgerät 18 ansehen und/oder anhören, so kann das Mobilgerät 18 eine zweite Anfrage an die Servereinrichtung 16 der Zentrale aussenden (Schritt 203). Die zweite Anfrage kann vorzugsweise in Form eines HTTP-Requests erfolgen. Insbesondere kann die zweite Anfrage die Information umfassen, dass eine Kommunikationsverbindung zwischen dem Mobilgerät 18 und der Recheneinrichtung 6 aufgebaut werden soll. Beispielsweise kann eine Streaming-Verbindungsanfrage ausgesendet werden.

Die zweite Anfrage kann in einem nächsten Schritt 204 von der Servereinrichtung 16 empfangen werden. Es versteht sich, dass optional Authentisierungsmechanismen vorgesehen sein können. Beispielsweise kann die Servereinrichtung 16 einen Benutzernamen und ein Passwort von dem Mobilgerät abfragen.

Bei einem negativen Authentifizierungsergebnis kann das Verfahren abgebrochen oder der Authentifizierungsvorgang wiederholt werden. Bei einer positiven Authentifizierung kann das Verfahren fortgesetzt werden. Nach dem Empfang der zweiten Anfrage des Mobilgeräts 18 wandelt die Servereinrichtung 16 die zweite Anfrage in eine erste Antwort um. Dann wartet die Servereinrichtung 16 auf die nächste erste Anfrage der Recheneinrichtung 6 (Schritt 201). Empfängt die Servereinrichtung 16 in dem Schritt 202 eine entsprechende erste Anfrage von der Recheneinrichtung 6, übermittelt die Servereinrichtung 16 als Antwort auf die erste Anfrage der Recheneinrichtung 6 an die Recheneinrichtung 6 die zweite Anfrage des Mobilgeräts 18. Der HTTP-Requests des Mobilgeräts 18 wird insbesondere von der Servereinrichtung 16 in eine HTTP-Response für die Recheneinrichtung 6 umgesetzt. Neben dieser Information können weitere Daten an die Recheneinrichtung 6 als Antwort übertragen werden. Beispielsweise können Adressdaten des Mobilgeräts 18, die Art der Kommunikationsverbindung bzw. die gewünschten Daten und dergleichen übertragen werden. Es versteht sich, dass ein Teil dieser Informationen auch erst zu einem späteren Zeitpunkt ausgetauscht werden kann.

In einem nächsten Schritt 206 empfängt die Recheneinrichtung 6 die erste Antwort der Servereinrichtung 16. Mit anderen Worten erhält die Recheneinrichtung 6 mittelbar die zweite Anfrage des Mobilgeräts 18. Eine Blockierung dieser Anfrage durch eine Firewall 28 wird umgangen, indem die zweite Anfrage des Mobilgeräts 18 als Antwort auf eine erste Anfrage der Recheneinrichtung 6 übertragen wird.

Nach Erhalt der zweiten Anfrage kann in einem nächsten Schritt 207 die Recheneinrichtung 6 für einen Verbindungsaufbau mit dem Mobilgerät 18 eine dritte Anfrage an das Mobilgerät 18 senden. Das Mobilgerät 18 empfängt die dritte Anfrage in Schritt 208. Um eine entsprechende Kommunikation zu ermöglichen, weist die Anwendung 22 des Mobilgeräts 18 eine Serveranwendung 26 auf. Die Serveranwendung 26 kann in Schritt 208 eine zweite Antwort an die Recheneinrichtung 6 senden. Wiederum kann in einfacher Weise eine Blockierung durch eine Firewall 28 umgangen werden.

Nach Empfang der zweiten Antwort (Schritt 209) kann zwischen dem Mobilgerät 18 und der Recheneinrichtung 6 eine Kommunikationsverbindung, insbesondere eine Punkt-zu-Punkt-Verbindung, hergestellt werden. Beispielsweise ist eine Streamingverbindung möglich.

In einem Schritt 210 kann beispielsweise auf die in der Datenquelle 8 gespeicherte Mediathek von der Recheneinrichtung 6 zugegriffen werden. Gewünschte Audio- und/oder Videodaten können als Datenstream an das Mobilgerät 18 über die hergestellte Kommunikationsverbindung übertragen werden. Das Mobilgerät 18 weist hierfür eine Clientanwendung, insbesondere eine Streaming-Clientanwendung, auf. Die Streaming-Clientanwendung kann bevorzugt in der Anwendung 22 integriert sein.

In einem Schritt 211 kann das Verfahren beendet werden. Möchte ein Benutzer danach erneut eine Kommunikationsverbindung mit der Recheneinrichtung 6 und/oder einer Datenquelle 8 aufbauen, so kann das Verfahren mit Schritt 203 fortgesetzt werden.

## Patentansprüche

1. Kommunikationssystem (2) mit
- mindestens einer Recheneinrichtung (6),
- mindestens einer von der Recheneinrichtung entfernt angeordneten, mit der Recheneinrichtung (6) über ein Netzwerk (14) verbindbaren Servereinrichtung (16) und
- einem Mobilgerät (18),
wobei
- die Recheneinrichtung (6) zum Senden einer Mehrzahl von ersten Anfragen an die Servereinrichtung (16) in vorgebbaren Zeitabständen eingerichtet ist,
- das Mobilgerät (18) eingerichtet ist, zum Herstellen einer Kommunikationsverbindung mit der Recheneinrichtung (6) eine zweite Anfrage an die Servereinrichtung (16) zu senden,
- die Servereinrichtung (16) eingerichtet ist, die empfangene zweite Anfrage des Mobilgeräts (18) in Form einer ersten Antwort auf eine der Mehrzahl von ersten Anfragen der Recheneinrichtung (6) an die Recheneinrichtung (6) zu senden,
- die Recheneinrichtung (6) eingerichtet ist, zum Herstellen der Kommunikationsverbindung mit dem Mobilgerät (18) eine dritte Anfrage nach Empfang der ersten Antwort der Servereinrichtung (16) an das Mobilgerät (18) zu senden, und
- das Mobilgerät (18) eingerichtet ist, auf die dritte Anfrage der Recheneinrichtung (6) eine zweite Antwort zum Herstellen der Kommunikationsverbindung an die Recheneinrichtung (6) zu senden, derart, dass eine Kommunikationsverbindung zwischen der Recheneinrichtung (6) und dem Mobilgerät (18) hergestellt wird.

2. Kommunikationssystem (2) nach Anspruch 1, **dadurch gekennzeichnet, dass**
- das Kommunikationssystem (2) ein Teilnetzwerk (4) umfasst, in dem die Recheneinrichtung (6) angeordnet ist,
- wobei das Teilnetzwerk (4) über eine Netzwerkeinrichtung (12) mit dem Netzwerk (14) verbindbar ist.

3. Kommunikationssystem (2) nach Anspruch 2, **dadurch gekennzeichnet, dass** die Netzwerkeinrichtung (12) eine Schutzanwendung (28) zur Beschränkung des externen Zugriffs auf das Teilnetzwerk (4) aufweist.

4. Kommunikationssystem (2) nach einem der vorherigen Ansprüche, **dadurch gekennzeichnet, dass**
- mindestens eine Datenquelle (8) mit der Recheneinrichtung (6) verbindbar ist,
- wobei die Recheneinrichtung (6) für eine gesicherte Übertragung von Daten zwischen der Datenquelle (8) und der Recheneinrichtung (6) über einen Kommunikationskanal (10) ausgestaltet ist.

5. Kommunikationssystem (2) nach einem der vorherigen Ansprüche, **dadurch gekennzeichnet, dass**
- das Mobilgerät (18) mindestens eine Anwendung (22) zur Erzeugung der zweiten Anfrage und/oder der zweiten Antwort aufweist,
- wobei die Anwendung (22) eine Client-Komponente (24) und/oder eine Server-Komponente (26) umfasst.

6. Kommunikationssystem (2) nach einem der vorherigen Ansprüche, **dadurch gekennzeichnet, dass** die Kommunikationsverbindung zwischen dem Mobilgerät (18) und der Recheneinrichtung (6) eine Punkt-zu-Punkt-Kommunikationsverbindung für einen Datenstream ist.

7. Verfahren zum Betreiben eines Kommunikationssystems (2) mit mindestens einem Mobilgerät (18), mindestens einer Recheneinrichtung (6) und mindestens einer von der Recheneinrichtung (6) entfernt angeordneten, mit der Recheneinrichtung (6) über ein Netzwerk (14) verbindbaren Servereinrichtung (16), wobei
- die Recheneinrichtung (6) eine Mehrzahl von ersten Anfragen an die Servereinrichtung (16) in vorgebbaren Zeitabständen sendet,
- das Mobilgerät (18) zum Herstellen einer Kommunikationsverbindung mit der Recheneinrichtung (6) eine zweite Anfrage an die Servereinrichtung (16) sendet,
- die Servereinrichtung (16) die empfangene zweite Anfrage des Mobilgeräts (18) in Form einer ersten Antwort auf eine der Mehrzahl von ersten Anfrage der Recheneinrichtung (6) an die Recheneinrichtung (6) sendet,
- die Recheneinrichtung (6) eine dritte Anfrage nach Empfang der ersten Antwort der Servereinrichtung (16) an das Mobilgerät (18) sendet, und
- das Mobilgerät (18) auf die dritte Anfrage der Recheneinrichtung (6) eine zweite Antwort zum Herstellen der Kommunikationsverbindung an die Recheneinrichtung (6) sendet, derart, dass eine Kommunikationsverbindung zwischen der Recheneinrichtung (6) und dem Mobilgerät (18) hergestellt wird.

8. Computerprogramm mit Instruktionen ausführbar derart, dass bei Ausführung des Computerprogramms auf einem Kommunikationssystem das Verfahren nach Anspruch 7 durchgeführt

## Claims

1. Communication system (2) comprising
- at least one computing device (6),
- at least one server device (16) remotely arranged from the computing device (6) and connectable to the computing device (6) via a network (14), and
- a mobile device (18),
**wherein**
- the computing device (6) is configured to send a plurality of first requests to the server device (16) at predeterminable time intervals,
- the mobile device (18) is configured to send a second request to the server device (16) for establishing a communication connection with the computing device (6),
- the server device (16) is configured to send the received second request of the mobile device (18) to the computing device (6) in the form of a first response to one of the plurality of first requests of the computing device (6),
- the computing device (6) is configured to send a third request to the mobile device (18) for establishing the communication connection with the mobile device (18) upon receipt of the first response of the server device (16); and
- the mobile device (18) is configured to send a second response to the third request of the computing device (6) for establishing the communication connection to the computing device (6), such that a communication connection is established between the computing device (6) and the mobile device (18).

2. Communication system (2) according to claim 1, **characterized in that**
- the communication system (2) comprises a subnetwork (4) in which the computing device (6) is arranged,
- wherein the subnetwork (4) is connected to the network (14) via a network device (12).

3. Communication system (2) according to claim 2, **characterized in that** the network device (12) comprises a protection application (28) for restricting external access to the subnetwork (4).

4. Communication system (2) according to one of the previous claims, **characterized in that**
- at least one data source (8) is connectable to the computing device (6),
- wherein the computing device (6) is configured for a secure transmission of data between the data source (8) and the computing device (6) via a communication channel (10).

5. Communication system (2) according to one of the previous claims, **characterized in that**
- the mobile device (18) comprises at least one application (22) for generating the second request and/or the second response,
- wherein the application (22) comprises a client component (24) and/or a server component (26).

6. Communication system (2) according to one of the previous claims, **characterized in that** the communication connection between the mobile device (18) and the computing device (6) is a point-to-point communication connection for a data stream.

7. Method for operating a communication system (2) having at least one mobile device (18), at least one computing device (6) and at least one server device (16) remotely arranged to the communication device and connectable to the computing device (6) via a network (14), **wherein**
- the computing device (6) sends a plurality of first requests to the server device (16) at predeterminable time intervals,
- the mobile device (18) sends a second request to the server device (16) for establishing a communication connection with the computing device (6),
- the server device (16) sends the received second request of the mobile device (18) to the computing device (6) in the form of a first response to one of the plurality of first requests of the computing device (6),
- the computing device (6) sends a third request to the mobile device (18) upon receipt of the first response of the server device (16); and
- the mobile device (18) sends a second response to the third request of the computing device (6) to establish the communication connection to the computing device (6), such that a communication connection is established between the computing device (6) and the mobile device (18).

8. A computer program having instructions executable such that by executing the computer program on a communication system (2) the method according to claim 7 is conducted.

## Revendications

1. Système de communication (2) comprenant :
- au moins un dispositif de calcul (6),
- au moins un dispositif de serveur (16) disposé en étant à distance du dispositif de calcul et pouvant être connecté au dispositif de calcul (6) par un réseau (14), et
- un appareil mobile (18),
où
- le dispositif de calcul (6) est agencé pour l'envoi au dispositif de serveur (16), d'une pluralité de premières requêtes suivant des intervalles de temps pouvant être prédéfinis,
- l'appareil mobile (18) est agencé pour envoyer une deuxième requête au dispositif de serveur (16), ledit envoi servant à l'établissement d'une liaison de communication avec le dispositif de calcul (6),
- le dispositif de serveur (16) est agencé pour envoyer au dispositif de calcul (6), la deuxième requête reçue de l'appareil mobile (18), ladite deuxième requête se présentant sous la forme d'une première réponse à l'une des requêtes parmi la pluralité de premières requêtes du dispositif de calcul (6),
- le dispositif de calcul (6) est agencé pour envoyer à l'appareil mobile (18) une troisième requête après réception de la première réponse du dispositif de serveur (16), ledit envoi servant à l'établissement de la liaison de communication avec l'appareil mobile (18), et
- l'appareil mobile (18) est agencé pour envoyer au dispositif de calcul (6) une deuxième réponse à la troisième requête du dispositif de calcul (6), ledit envoi servant à l'établissement de la liaison de communication, de manière telle qu'une liaison de communication soit établie entre le dispositif de calcul (6) et l'appareil mobile (18).

2. Système de communication (2) selon la revendication 1, **caractérisé**
- **en ce que** le système de communication (2) comprend un sous-réseau (4) dans lequel est disposé le dispositif de calcul (6),
- où le sous-réseau (4) peut être connecté au réseau (14) par un dispositif de réseau (12).

3. Système de communication (2) selon la revendication 2, **caractérisé en ce que** le dispositif de réseau (12) présente une application de protection (28) servant à la limitation de l'accès externe au sous-réseau (4).

4. Système de communication (2) selon l'une quelconque des revendications précédentes, **caractérisé**
- **en ce qu'**au moins une source de données (8) peut être connectée au dispositif de calcul (6),
- où le dispositif de calcul (6) est conçu pour une transmission sécurisée de données, par un canal de communication (10), ladite transmission se produisant entre la source de données (8) et le dispositif de calcul (6).

5. Système de communication (2) selon l'une quelconque des revendications précédentes, **caractérisé**
- **en ce que** l'appareil mobile (18) présente au moins une application (22) servant à l'élaboration de la deuxième requête et/ou de la deuxième réponse,
- où l'application (22) comprend un composant (24) de l'architecture client et/ou un composant (26) de l'architecture serveur.

6. Système de communication (2) selon l'une quelconque des revendications précédentes, **caractérisé en ce que** la liaison de communication entre l'appareil mobile (18) et le dispositif de calcul (6) est une liaison de communication point à point pour un flux de données.

7. Procédé de fonctionnement d'un système de communication (2) comprenant au moins un appareil mobile (18), au moins un dispositif de calcul (6) et au moins un dispositif de serveur (16) disposé en étant à distance du dispositif de calcul (6) et pouvant être connecté au dispositif de calcul (6) par un réseau (14), où
- le dispositif de calcul (6) envoie au dispositif de serveur (16) une pluralité de premières requêtes suivant des intervalles de temps pouvant être prédéfinis,
- l'appareil mobile (18) envoie une deuxième requête au dispositif de serveur (16), ledit envoi servant à l'établissement d'une liaison de communication avec le dispositif de calcul (6),
- le dispositif de serveur (16) envoie au dispositif de calcul (6), la deuxième requête reçue de l'appareil mobile (18), ladite deuxième requête se présentant sous la forme d'une première réponse à l'une des requêtes parmi la pluralité de premières requêtes du dispositif de calcul (6),
- le dispositif de calcul (6) envoie à l'appareil mobile (18), une troisième requête après réception de la première réponse du dispositif de serveur (16), et
- l'appareil mobile (18) envoie au dispositif de calcul (6), une deuxième réponse à la troisième requête du dispositif de calcul (6), ledit envoi servant à l'établissement de la liaison de communication, de manière telle qu'une liaison de communication soit établie entre le dispositif de calcul (6) et l'appareil mobile (18).

8. Programme informatique comportant des instructions pouvant être exécutées de manière telle, que, lors de l'exécution du programme informatique sur un système de communication, le procédé selon la revendication 7 soit mis en oeuvre.
